Europäisches Patentamt

European Patent Office

Office européen des brevets

(11) Veröffentlichungsnummer: **0 134 429**
**B1**

(12) **EUROPÄISCHE PATENTSCHRIFT**

(45) Veröffentlichungstag der Patentschrift:
21.01.87

(51) Int. Cl.⁴: **B 60 T 8/32**

(21) Anmeldenummer: 84106737.4

(22) Anmeldetag: 13.06.84

(54) **Antiblockierregelsystem.**

(30) Priorität: 14.06.83 DE 3321376
29.10.83 DE 3339336

(43) Veröffentlichungstag der Anmeldung:
20.03.85 Patentblatt 85/12

(45) Bekanntmachung des Hinweises auf die Patenterteilung: 21.01.87 Patentblatt 87/04

(84) Benannte Vertragsstaaten:
DE FR GB SE

(56) Entgegenhaltungen:
DE-A- 2 406 169
DE-A- 2 517 778
DE-A- 2 755 814
DE-A- 3 040 548

(73) Patentinhaber: ROBERT BOSCH GMBH
Postfach 50
D-7000 Stuttgart 1 (DE)

(72) Erfinder: Leiber, Heinz, Ing.-grad.
Theodor-Heuss-Strasse 34
D-7141 Oberriexingen (DE)
Erfinder: Jonner, Wolf-Dieter, Dipl.-Ing.
Burgunderstrasse 25
D-7141 Beilstein (DE)

(74) Vertreter: Kammer, Arno, Dipl.-Ing.
ROBERT BOSCH GmbH Zentralabteilung Patente Postfach 50
D-7000 Stuttgart 1 (DE)

## Beschreibung

Die Erfindung betrifft ein aus der DE-A-2 755 814 bekanntes Antiblockierregelsystem gemäß dem Oberbegriff des Anspruchs 1.

Das erfindungsgemäße Antiblockierregelsystem gemäß den Merkmalen des Anspruchs 1 vereinigt die an sich bekannte Gradientenumschaltung mit der Verwendung eines Einspeiseventils und verbessert und vereinfacht diese Betätigung für diese Ventil-Kombination. Weiterbildungen und Vorteile ergeben sich aus der Beschreibung der Ausführungsbeispiele.

Anhand der Zeichnung werden Ausführungsbeispiele der Erfindung beschrieben. Hierbei zeigt:

Figur 1   das Prinzip eines ersten Ausführungsbeispiels, und

Figur 2   eine detaillierte Ausführungsform eines Teils der Fig. 1,

Figur 3   ein anderes Ausführungsbeispiel,

Figur 4   Druckverläufe.

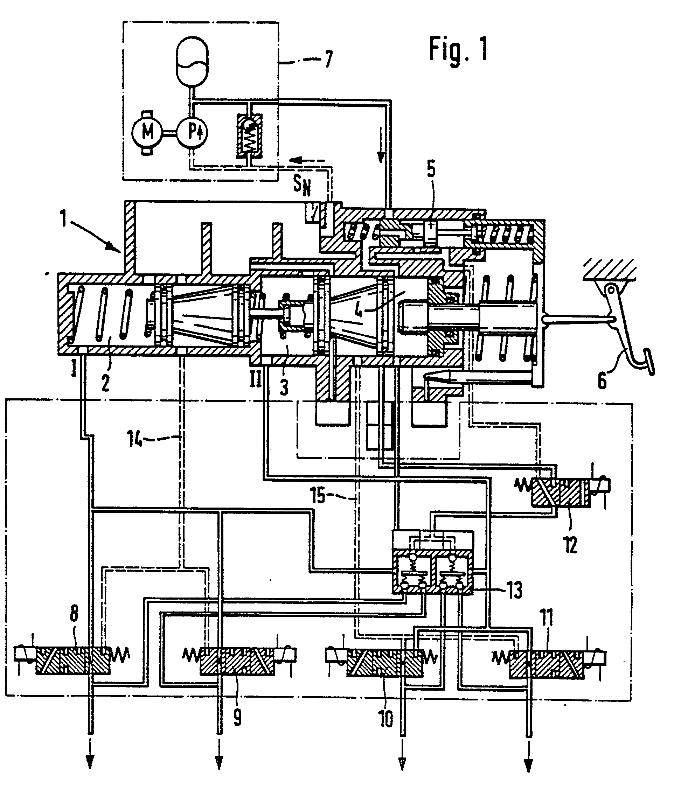

In Fig. 1 ist mit 1 eine Hauptbremszylinderanordnung bezeichnet, die zwei Hauptbremszylinder 2 und 3, an die Bremskreise I und II angeschlossen sind, einen Steuerraum 4 für diese Hauptbremszylinder 2 und 3, ein Bremsventil 5 das durch ein Pedal 6 betätigt wird und den Druck im Steuerraum 4 bestimmt und eine Druckversorgung 7, von der der Druck im Druckraum 4 abgeleitet wird, aufweist.

In Leitungen zu den nicht gezeigten Radbremszylindern sind hier in jedem Bremskreis zwei als Magnetventile ausgebildete Bremsdruckregelventile 8-11 eingeschaltet. Diese Ventile sind 3/3-Ventile, mit denen — wie am Ventil 11 gezeigt — im Falle der Antiblockierregelung Druck gedrosselt aufgebaut, konstant gehalten und abgebaut (Rücklaufleitungen 14 und 15) werden kann.

Weiterhin ist eine magnetisch betätigbare Steuereinrichtung vorgesehen, die aus einem 3/2-Magnetventil 12 und einer zweigeteilten Ventileinrichtung 13 besteht. Die Ventileinrichtung 13 ist mit dem Druckraum 4 direkt verbunden und mit der Druckversorgung 7 durch das Magnetventil 12 verbindbar. Ausserdem steht die zweigeteilte Ventileinrichtung mit je einem der Hauptbremszylinder 2 bzw. 3 in Verbindung. Die vier Ausgänge der Ventileinrichtung führen zu den Ausgängen der Bremsdrucksteuerventile 8-11. Damit sind die Hauptbremszylinder 2 und 3 über die Ventileinrichtung 13 im Normalfall unter Überbrückung der Ventile 8-11 direkt mit den Radbremszylindern verbunden, d. h., es sind, solange diese Ventileinrichtung 13 in der gezeigten Stellung verbleibt, die Ventile 8-11 durch je einen Nebenschluß überbrückt und es ist dann ein schneller Druckaufbau möglich.

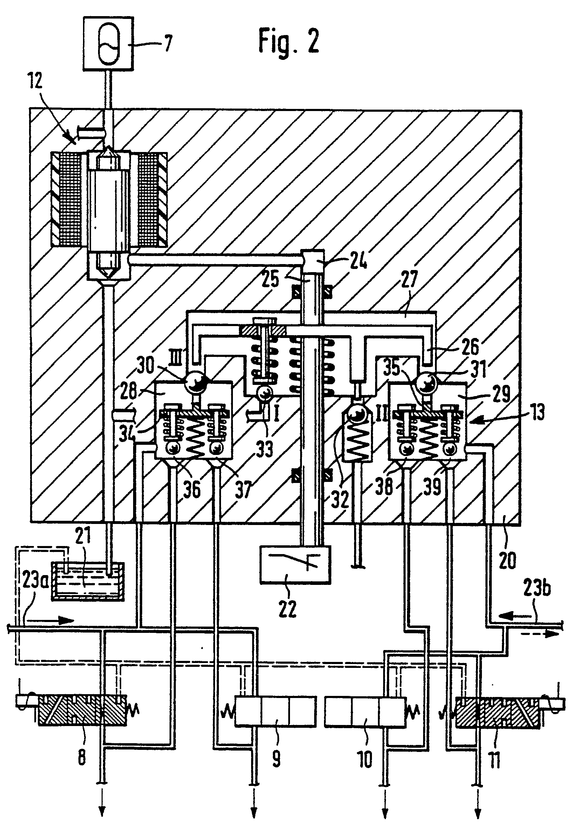

In Fig. 2 ist die Ventileinrichtung 13 und das Magnetventil 12 in einem Ventilblock 20 untergebracht. Auch sind die Ventile 8-11, die Druckversorgung 7, ein Reservoir 21, ein Schalter 22 und Verbindungsleitungen 23a und b von den Hauptbremszylindern 2 und 3 zu den Ventilen 8-11 gezeigt.

Das 3/2-Magnetventil 12 verbindet je nach Ansteuerung entweder die Druckversorgung 7 oder das Reservoir 21 mit einem Druckraum 24, an den ein Kolben 25 angrenzt.

Der Ventilblock 20 weist drei Druckräume 27-29 auf, die in der gezeigten Stellung durch Verschlußkörper von Trennventilen 30 und 31 voneinander getrennt sind. Die Druckkammer 27 ist durch Öffnen eines Einspeiseventils 32 mit der Druckkammer 4 verbindbar. Außerdem ist die Kammer 27 in der gezeigten Stellung mit dem Reservoir 21 verbunden. Diese Verbindung ist durch ein Auslaßventil 33 verschließbar. Zur Betätigung der Ventile 30-33 sind Betätigungsmittel 26 vorgesehen, die mit dem Kolben 25 verbunden sind. Mit den Verschlußkörpern der Ventile 30 und 31 sind in den Druckkammern 28 und 29 weitere Betätigungsmittel 34 bzw. 35 verbunden, die Verschlußkörper von Nebenschlußventilen 36-39 tragen. Diese Verschlußkörper sind relativ zu den Betätigungsmitteln 34 und 35 gegen die Kraft von Federn verschiebbar. Sie dienen somit noch zusätzlich als Einrichtungs-Ventile, die ab einem bestimmten Druckunterschied öffnen und dann Druck an den Ausgängen der Ventile 8-11 abbauen. Die Druckkamer 28 und 29 sind mit den von den Hauptbremszylindern kommenden Leitungen 23a und b verbunden. Mittels der durch das 3/2-Ventil 12 steuerbaren Verschiebung der Betätigungsmittel 26 werden die Ventile 30-33 und 36-39 und der Schalter 22 gleichzeitig betätigt.

Die beschriebene Anordnung arbeitet wie folgt:

Bei normalen Bremsen sind alle Ventile in der gezeigten Stellung. Tritt eine Blockierneigung auf, so wird das 3/2-Ventil 12 betätigt und damit die Nebenschlußventile 36-39 geschlossen, d. h., die Nebenschlüsse gesperrt, so daß ab dann Druck nur noch gedrosselt aufgebaut werden kann. Gleichzeitig wird das Auslaßventil 33 geschlossen, das Einlaßventil 32 geöffnet und die Trennventile 30 und 31, die die Bremskreise I und II im Normalfall trennen, geöffnet. Damit wird der Vordruck der Druckkammer 4 an die Bremsdrucksteuerventile 8-11 gelegt. Diese werden — wie auch das Magnetventil 12 — von der nicht gezeigten Auswerteschaltung des Antiblockierregelsystems angesteuert. Da der Schalter 22 in die Ansteuerung mit einbezogen ist, erfolgt eine Ansteuerung der Ventile 8-11 nur, wenn der Kolben 25 verschoben und der Schalter 22 betätigt ist.

Die Einspeisung von Druck über das Ventil 32 bei Blockierneigung verhindert, daß durch Druckabsenkung sich das Druckmittel der Hauptbremszylinder erschöpft. Bei der gezeigten Lösung wird ein Ventil direkt und es werden acht Ventile indirekt mittels nur eines Magneten betätigt. Die Rücksteuerung der Ventile erfolgt am Bremsende.

Will man während der Antiblockierregelung zusätzlich die Verbindung zwischen den Hauptbremszylindern und den Bremsdrucksteuerventilen trennen, so kann man zusätzlich diese Verbindung ebenfalls über den Ventilblock 13 führen und dort Ventile unterbringen, die ebenfalls durch die Betätigungsmittel z. B. zusammen mit den Ventilen 36-39 geschlossen werden. Hierdurch werden die Kolben der Hauptbremszylinder bei Blockierneigung blockiert.

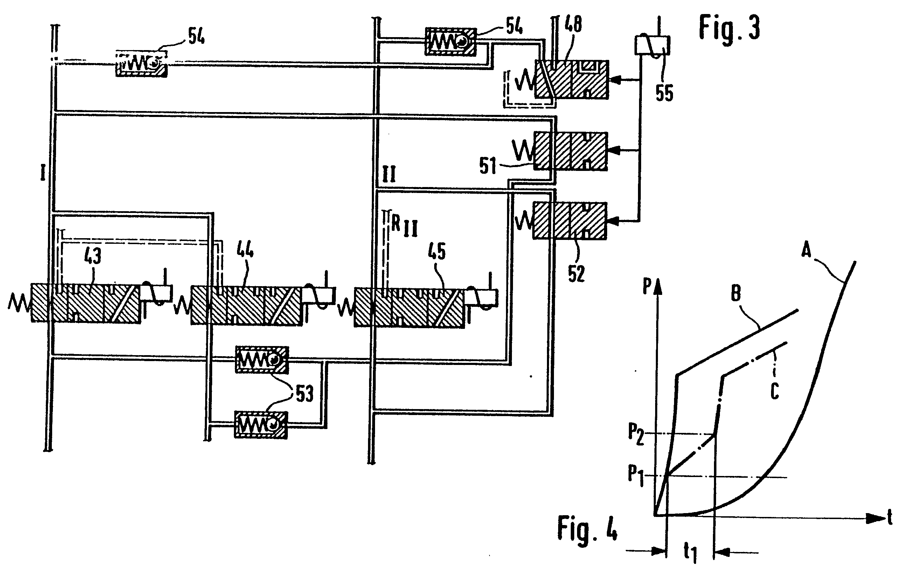

In Fig. 3 sind Bremsdrucksteuerventile 43-45 ebenfalls Dreistellungsventile, wobei die erste Stellung eine gewisse Drosselung aufweist. Diese Bremsdrucksteuerventile 43 und 44 des Bremskreises I einerseits und 45 für den Bremskreis II andererseits werden normalerweise durch Zweistellungsventile 51 und 52 überbrückt. Rückschlagventile 53 dienen der Trennung der Ausgänge der Ventile 43 und 44. Es ist hier ein Einspeiseventil 48 vorgesehen, über das und über Trennrückschlagventile 54 bei Blockierneigung der Vordruck eingesteuert wird. Im Normalfall sind die gedrosselten Wege in den Ventilstellungen 1 der Ventile 43-45 überbrückt (schnellen Druckaufbau). Bei Betätigung des zentralen Magneten 55 werden das Druckeinspeiseventil 48 und die Nebenschlußventile 51 und 52 gleichzeitig umgeschaltet, sodaß der Druck nur noch langsam erhöht werden kann. Das Ventil 48 verhindert ein Erschöpfen des Druckmittels in den Hauptbremszylindern.

Durch die Maßnahmen der Fig. 1 bis 3 ist ein außerordentlich schneller Druckanstieg möglich, was insbesondere bei Hydrauliksystemen nötig ist. Die Umschaltung des Gradienten, wenn ein Regelsignal eines der Räder vorliegt, hat zur Folge, daß der Druckgradient viel kleiner gewählt werden kann, als bei einem System ohne Gradientenumschaltung. Werden die Ventile getaktet, so hat der kleinere Druckgradient den Vorteil, daß nach Beendigung des Druckaufbaus die anschließende Druckschwingung in der Amplitude erheblich kleiner wird, was insbesondere das Geräuschniveau erheblich reduziert. Die Gradientenumschaltung läßt sich aber auch unabhängig vom ABS-Signal auf die Betätigungsgeschwindigkeit auslegen oder auch in Abhängigkeit von einem bestimmten Druckniveau gestalten. Bei niedrigen Kraftschlußbeiwerten ist eine hohe Druckanstiegsgeschwindigkeit nachteilhaft, da infolge der endlichen Ventilschaltzeiten der Drucküberschuß für den 1. Regelzyklus und damit die Regelabweichung groß wird. Zur Verbesserung des Zustandes kann z. B. erst nach Überschreiten eines Druckniveaus, z. B. 10 bar, der Druckgradient kurz umgeschaltet werden.

Figur 4 zeigt den zeitlichen Verlauf des Druckes bei verschiedenen Systemen. Die Kurve A entspricht einer Ventildimensionierung wie eingangs erwähnt ohne Gradientenumschaltung. Die Kurve B entspricht der in Figur 1 und 3 gezeigten Ventilanordnung : mit der Ansteuerung des zentralen Magneten 55 bzw. des Druckeinspeisungsventil 12 folgt eine Gradientenumschaltung. Die Kurve C soll eine weitere Verbesserung bei niedrigen Kraftschlußbeiwerten bringen.

Nach Überschreiten eines bestimmten Druckwertes oder auch einer bestimmten Pedalstellung, wird der Gradient für eine bestimmte Zeit T1 oder bis zur Erreichung einer 2. Pedal- oder Druckgrenze umgeschaltet. Erst später erfolgt die Umschaltung zusammen mit dem Einspeiseventil.

**Patentansprüche**

1. Antiblockerregelsystem mit in die Bremsleitungen eingeschalteten Bremsdrucksteuerventilen (8-11 ; 43-45) zur Variation des Bremsdrucks und mit einer Möglichkeit zur Umschaltung des Gradienten des Druckanstiegs, dadurch gekennzeichnet, daß parallel zu wenigstens einem Bremsdrucksteuerventil (8-11 ; 43-45) zur schnellen Druckerhöhung ein normalerweise durchlässiges Nebenschlußventil (36-39 ; 51-52) geschaltet ist, daß ein Einspeiseventil (32 ; 48) vorgesehen ist, um im Falle der Antiblockierregelung die Eingänge der Bremsdrucksteuerventile mit einer Druckquelle, vorzugsweise einem Druckraum (4) zu verbinden, in dem ein von einem pedalbetätigt Bremsventil (5) eingesteuerte Druck herrscht, und daß das wenigstens eine Nebenschlußventil (36-39 ; 51-52) und das Einspeiseventil (32 ; 48) mittels einer elektromagnetisch betätigbaren Steuereinrichtung (12, 13) betätigt wird, die nur einen Betätigungsmagneten (55) umfaßt.

2. Antiblockierregelsystem nach Anspruch 1, dadurch gekennzeichnet, daß der einzige Betätigungsmagnet (55) direkt das wenigstens eine Nebenschlußventil (51 und 52) und das Einspeiseventil (48) betätigt.

3. Antiblockierregelsystem nach Anspruch 1 oder 2, dadurch gekennzeichnet, daß bei Verwendung von zwei Nebenschlußventilen diese als Doppelventil ausgebildet sind.

4. Antiblockierregelsystem nach einem der Ansprüche 1 bis 3, dadurch gekennzeichnet, daß die Umschaltung des Einspeise- und/oder der Nebenschlußventile über ein bei Blockierneigung an wenigstens einem Rad auftretendes Signal erfolgt.

5. Antiblockierregelsystem nach einem der Ansprüche 1 bis 4, dadurch gekennzeichnet, daß zusätzlich zeitweise ab einer Druckschwelle zwischen zwei Druckwerten oder zwischen zwei vorgegebenen Pedalstellungen oder zusätzlich in Abhängigkeit von der Betätigungsgeschwindigkeit des Pedals auf den kleinen Gradienten eingeschaltet wird.

6. Antiblockierregelsystem nach Anspruch 1, dadurch gekennzeichnet, daß die Steuereinrichtung ein elektromagnetisch betätigbares Ventil (12) und einen Steuerzylinder (24) mit Steuerkolben (25) umfaßt, daß der Steuerzylinder (24) durch Schalten des Ventils (12) entweder an eine Quelle (7) hohen Drucks oder eine drucklose Leitung anschaltbar ist und daß der Steuerkolben (25) mit Betätigungsmitteln (26) verbunden ist, mittels denen aufgrund der während der Blockierneigung eingesteuerten Stellung des Steuerkolbens (25) das Einspeiseventil (32) geöffnet und die Nebenschlußventile (36-39) gesperrt werden.

7. Antiblockierregelsystem nach Anspruch 6, dadurch gekennzeichnet, daß die Nebenschlußventile (36-39) derart ausgebildet sind, daß sie während ihrer Sperrung als Einrichtungsventil zum Abbau von Druck an den Radbremsen bei hohem Überschuß des Drucks am Ausgang gegenüber dem Eingang der Bremsdruckregelventile (8-11) wirksam sind.

8. Antiblockierregelsystem nach Anspruch 6 oder 7 mit wenigstens zwei Bremskreisen, dadurch gekennzeichnet, daß zwischen das Einspeiseventil (32) und die Verzweigung zu den Bremskreisen Trennventile (30, 31) eingeschaltet sind und daß diese ebenfalls mittels der Betätigungsmittel (26) öffenbar sind.

9. Antiblockierregelsystem nach einem der Ansprüche 6 bis 8, dadurch gekennzeichnet, daß ein elektrischer Schalter (22) vorgesehen ist, der durch die Betätigungsmittel (26) betätigt wird, und daß dieser mit der Ansteuerung der Bremsdrucksteuerventile (8-11) derart verschaltet ist, daß die Bremsdrucksteuerventile (8-11) nur nach Verschieben der Betätigungsmittel (26) aus der Ausgangslage betätigbar sind.

10. Antiblockierregelsystem nach einem der Ansprüche 6 bis 9, dadurch gekennzeichnet, daß das Einspeiseventil (32) die Nebenschlußventile (36-39) und gegebenenfalls die Trennventile (30, 31) in einem gemeinsamen Ventilblock (13) untergebracht sind.

11. Antiblockierregelsystem nach Anspruch 10, dadurch gekennzeichnet, daß dieser Ventilblock (13) drei Räume (27-29) aufweist, von denen ein erster (27) über das Einspeiseventil (32) mit der Druckquelle (7) und die beiden anderen (28 und 29) über die Trennventile (30, 31) mit dem ersten Raum (27) verbindbar sind, und daß jeder der beiden anderen Räume (28 und 29) zwei durch die Nebenschlußventile (36, 37 bzw. 38, 39) verschleißbare Ausgänge zu den Radbremsen und eine Verbindung (23a bzw. b) zu einem Hauptbremszylinder aufweist.

12. Antiblockierregelsystem nach Anspruch 11, dadurch gekennzeichnet, daß ein Auslaßventil (33) vorgesehen ist, das den ersten Raum (27) mit einer drucklosen Rüklaufleitung verbindet und daß dieses Auslaßventil (33) bei Betätigung der Betätigungsmittel (26) as erstes verschließbar ist.

13. Antiblockierregelsystem nach einem der Ansprüche 6 bis 12, dadurch gekennzeichnet, daß in die Verbindung zwischen wenigstens einem Hauptbremszylinder und den zugehörigen Bremsdrucksteuerventilen (8-11) je ein ebenfalls in dem Ventilblock (13) untergebrachtes Ventil eingeschaltet ist, das bei Betätigung der Betätigungsmittel während der Blockierneigung geschlossen wird.

## Claims

1. Antiblock control system with brake pressure control valves connected in the brake lines for variation of the brake pressure and with a capability for changing over the gradient of the pressure increase, characterized in that, for rapid pressure increase, a normally passable by-pass valve is connected parallel to at least one brake pressure control valve, in that a feed valve is provided in order to connect the inputs of the brake pressure control valves in the event of antiblocking control to a pressure source, preferably a pressure space in which a pressure which is adjusted by a pedal-operated brake valve prevails, and in that at least one by-pass valve and the feed valve are operated by means of an electromagnetically operable control device which comprises only one operating magnet.

2. Antiblock control system according to claim 1, characterized in that the single operating magnet (55) directly operates the at least one by-pass valve (51 and 52) and the feed valve (48).

3. Antiblock control system according to Claim 1 or 2, characterized in that if two by-pass valves are used they are designed as a double valve.

4. Antiblock control system according to one of Claims 1 to 3, characterized in that the changeover of the feed and/or the by-pass valves is performed via a signal occurring at least one wheel if there is a blocking tendency.

5. Antiblock control system according to one of Claims 1 to 4, characterized in that, in addition, at times the system switches to the small gradient as' from a pressure threshold between two pressure values or between two given pedal positions or, in addition, as a function of the speed of operation of the pedal.

6. Antiblock control system according to Claim 1, characterized in that the control device comprises an electromagnetically operable valve (12) and a control cylinder (24) with control plunger (25), in that the control cylinder (24) can be switched on by switching the valve (12) either to a source (7) of high pressure or to a pressureless line, and in that the control plunger (25) is connected to operating means (26), by means of which the feed valve (32) is opened and the by-pass valves (36, 39) are closed on account of the position to which the control plunger (25) is adjusted during the blocking tendency.

7. Antiblock control system according to Claim 6, characterized in that the by-pass valves (36, 39) are designed such that during their blocking they act as adjustment valve for the reduction of pressure at the wheel brakes if there is a high excess of pressure at the outlet compared with the inlet of the brake pressure control valves (8, 11).

8. Antiblock control system according to Claim 6 or 7, with at least two brake circuits, characterized in that shut-off valves (30, 31) are connected between the feed valve (32) and the branch to the brake circuits, and in that these shut-off valves can likewise be opened by means of the operating means (26).

9. Antiblock control system according to one of Claims 6 to 8, characterized in that an electric switch (22) is provided, which is operated by the operating means (26), and in that this switch is wired to the actuation of the brake pressure control valves (8-11) in such a way that the brake pressure control valves (8-11) can only be operated after displacement of the operating means (26) from the starting position.

10. Antiblock control system according to one of Claims 6 to 9, characterized in that the feed valve (32), the by-pass valves (36-39) and, if applicable, the shut-off valves (30, 31) are accommodated in a common valve block (13).

11. Antiblock control system according to Claim 10, characterized in that this valve block has three spaces (27-29), of which a first space (27) can be connected *via* the feed valve (32) to the pressure source (7) and the other two spaces (28 and 29) can be connected *via* the shut-off valves (30, 31) to the first space (27), and in that each of the other two spaces 28 and 29 has two outlets, which can be closed by the by-pass valves (36, 37 or 38, 39) to the wheel brakes and a connection (23a or 23b) to a main brake cylinder.

12. Antiblock control system according to claim 11, characterized in that an outlet valve (33) is provided, which connects the first space (27) to a pressureless return line, and in that this outlet valve (33) can be closed as first valve on operation of the operating means (26).

13. Antiblock control system according to one of Claims 6 to 12, characterized in that in each connection between at least one main brake cylinder and the associated brake pressure control valves (8-11) is connected a valve which is likewise accommodated in the valve block (13) and is closed on operation of the operating means during the blocking tendency.

**Revendications**

1. Système de régulation antiblocage avec des distributeurs de commande de la pression de freinage insérés dans les canalisations de freinage pour variation de la pression de freinage, et avec une possibilité de commutation du gradient de croissance de la pression, ledit système étant caractérisé en ce qu'un distributeur de dérivation normalement ouvert est branché en parallèle avec un distributeur de commande de la pression de freinage au moins ; un distributeur d'alimentation est prévu pour relier, en cas de régulation antiblocage, les entrées des distributeurs de commande de la pression de freinage à une source de pression, et de préférence à une chambre de pression dans laquelle règne une pression appliquée par une soupape de frein commandée par une pédale ; et un distributeur de dérivation au moins et le distributeur d'alimentation sont actionnés par un dispositif de commande électromagnétique ne comprenant qu'un seul électroaimant de commande.

2. Système de régulation antiblocage selon revendication 1, caractérisé en ce que l'électroaimant de commande unique (55) actionne au moins un distributeur de dérivation (51, 52) et le distributeur d'alimentation (48).

3. Système de régulation antiblocage selon une des revendications 1 ou 3, caractérisé en ce qu'en cas d'emploi de deux distributeurs de dérivation, ces derniers sont réalisés sous forme d'un distributeur double.

4. Système de régulation antiblocage selon une quelconque des revendications 1 à 3, caractérisé en ce que la commutation du distributeur d'alimentation et/ou des distributeurs de dérivation s'effectue par l'intermédiaire d'un signal apparaissant en cas de tendance au blocage d'une roue au moins.

5. Système de régulation antiblocage selon une quelconque des revendications 1 à 4, caractérisé par la commutation temporaire supplémentaire sur le faible gradient à partir d'un seuil de pression entre deux valeurs de pression, entre deux positions prédéterminées de la pédale ou en fonction de la vitesse de commande de la pédale.

6. Système de régulation antiblocage selon revendication 1, caractérisé en ce que le dispositif de commande comprend un distributeur électromagnétique (12) et un cylindre de commande (24) avec un piston de commande (25) ; la commutation du distributeur (12) relie le cylindre de commande (24) soit à une source (17) à pression élevée, soit à une canalisation sans pression ; et le piston de commande (25) est relié à des moyens de commande (26) qui, par suite de la position du piston de commande (25) imposée pendant la tendance au blocage, ouvrent la soupape d'alimentation (32) et ferment les soupapes de dérivation (36-39).

7. Système de régulation antiblocage selon revendication 6, caractérisé en ce que les soupapes de dérivation (36-39) sont réalisées de façon à agir, pendant leur fermeture, comme une soupape de réglage pour réduire la pression sur les freins de roue quand la pression de sortie est très supérieure à la pression d'entrée des distributeurs de réglage de la pression de freinage (8-11).

8. Système de régulation antiblocage selon une des revendications 6 ou 7, comportant au moins deux circuits de freinage et caractérisé en ce que des soupapes d'isolement (30, 31) sont insérées entre la soupape d'alimentation (32) et la dérivation vers les circuits de freinage ; et lesdites soupapes d'isolement sont également ouvertes par les moyens de commande (26).

9. Système de régulation antiblocage selon une quelconque des revendications 6 à 8, caractérisé en ce qu'un interrupteur électrique (22) est prévu, qui est actionné par les moyens de commande (26) ; et ledit interrupteur est interconnecté avec la commande des distributeurs de réglage de la pression de freinage (8-11) de façon que ces derniers ne peuvent être commandés qu'après translation des moyens de commande (26) à partir de leur position de départ.

10. Système de régulation antiblocage selon une quelconque des revendications 6 à 9, caractérisé en ce que la soupape d'alimentation (32), les soupapes de dérivation (36-39) et le cas échéant les soupapes d'isolement (30, 31) sont logées dans un bloc de valves commun (13).

11. Système de régulation antiblocage selon revendication 10, caractérisé en ce que ledit bloc de valves comprend trois chambres (27-29), dont la première (27) est reliée par la soupape d'alimentation (32) à la source de pression (7) et dont les deux autres (28 et 29) sont reliées à la première chambre (27) par les soupapes d'isolement (30, 31) ; et chacune des deux autres chambres (28 et 29) comprend deux sorties vers les freins de roue, obturables par les soupapes de dérivation (36, 37 ou 38, 39) et une liaison (23a ou b) avec un maître-cylindre.

12. Système de régulation antiblocage selon revendication 11, caractérisé en ce qu'une soupape de sortie (33) est prévue, qui relie la première chambre (27) à une canalisation de retour sans pression ; et ladite soupape de sortie (33) est fermée la première lors de la manœuvre des moyens de commande (26).

13. Système de régulation antiblocage selon une quelconque des revendications 6 à 12, caractérisé en ce qu'une soupape, également logée dans le bloc de valves (13) et fermée par la manœuvre des moyens de commande pendant la tendance au blocage, est insérée dans la liaison entre un maître-cylindre au moins et chacun des distributeurs de réglage de la pression de freinage (8-11) correspondants.

Fig. 1

Fig. 2

0 134 429

2

Fig. 3

Fig. 4

0 134 429